# EUROPEAN PATENT APPLICATION

(11) **EP 1 225 739 A1**
(43) Date of publication of application: **24.07.2002**
(21) Application number: 01915682.7
(22) Date of filing: 22.03.2001
(51) Int. Cl.: H04L 27/00, H04L 7/08

(54) **RADIO COMMUNICATION RECEIVER**

(30) Priority: 31.07.2000 JP 2000231065
(71) Applicant: MITSUBISHI DENKI KABUSHIKI KAISHA, Tokyo 100-8310 (JP)
(72) Inventor: NAGAYASU, Takayuki, itsubishi Denki K.K., Tokyo 100-8310 (JP)
(74) Representative: Pfenning, Meinig & Partner
(86) International application number: PCT/JP01/02260
(87) International publication number: WO 02/11381

(57) **Abstract**

A frequency offset correction value estimation section (21) receives a signal including a predetermined fixed pattern from a transmission side, thereafter, selects a combination of fixed patterns used in a process of estimating a frequency offset is selected depending on the state of a channel, and an estimation result of the frequency offset calculated by the combination of the fixed patterns is output as a correction value of a determined frequency offset. A frequency offset correction section (22) receives the received signal obtained after the correction is performed for correcting a frequency offset of the received signal on the basis of the correction value, and an equalizer (23) demodulates the received signal by using a predetermined algorithm.

## Description

### TECHNICAL FIELD

The present invention relates to a receiver which can be applied to a wireless communication for example in automobile telephones, portable telephones, cordless telephones. Particularly, this invention relates to a wireless communication receiver having a frequency offset correction function.

### BACKGROUND ART

A conventional wireless communication receiver will be described below. For example, a transmitter generates a signal which executes channel encoding to information data including data obtained by encoding voice, data of the internet, and the like and which transmits the resultant information data. After the signal is modulated, up-conversion is executed on the basis of a frequency generated by a local oscillator. The transmitted signal obtained here is transmitted through an antenna.

Thereafter, the transmitted signal is received by a receiver through an antenna, and is down-converted on the basis of a frequency generated by a local oscillator. The down-converted received signal is converted into a digital received signal (to be referred to as a received signal hereinafter) by an analog/digital converter.

In general, an offset exists between the frequencies of the oscillator in the transmitter and the oscillator in the receiver. In this case, the offset of the frequencies, i.e., the frequency offset causes the received signal to be distorted. For this reason, in order to realize communication having high quality, the frequency offset must be corrected.

In addition, in a communication environment of an automobile telephone, distortion of the received signal may be generated by frequency selective fading caused by intersymbol interference. In such a case, the receiver must perform a correction process for the frequency offset and a demodulation process in consideration of the intersymbol interference.

As a conventional receiver having a frequency offset correction function, for example, an automatic frequency control circuit (to be referred to as a conventional receiver hereinafter) described in Japanese Patent Application Laid-Open No. 10-163816. In this example, the transmission device repeatedly transmits the pattern of a fixed PN signal as a preamble pattern, and the receiver calculates a phase deviation per symbol on the basis of the component of a PN signal which is demodulated in a preamble period and which is obtained one cycle before and the signal component of a present PN code. A conventional receiver performs correction of a phase in units of symbols in a data period on the basis of the phase deviation.

However, in the conventional receiver, correction of the phases is performed on the basis of the phase deviation calculated by using the preamble pattern. On the other hand, for example, when the preamble period is elongated to improve an estimated precision of the frequency offset, the estimated precision of the frequency offset is deteriorated. In any cases, communication quality is deteriorated disadvantageously.

Therefore, it is an object of the present invention to provide awireless communication receiver which estimates a frequency offset at a high precision and corrects the frequency offset in the communication environment in which frequency selective fading exists so as to make it possible to realize preferable communication quality.

### DISCLOSURE OF THE INVENTION

A wireless communication receiver according to one aspect of the present invention comprises: a frequency offset correction value estimation unit (corresponding to a frequency offset correction value estimation section 21 according to an embodiment to be described later) which receives a signal including a predetermined fixed pattern from a transmission side, thereafter, selects a combination of fixed patterns used in an estimation process of a frequency offset depending on the state of a channel, and outputs an estimation result of the frequency offset calculated by using the combination of the fixed patterns as a correction value of a determined frequency offset; a frequency offset correction unit (corresponding to a frequency offset correction section 22) which corrects a frequency offset of a received signal on the basis of the correction value; and an equalizer (corresponding to an equalizer 23) which receives the received signal obtained after the correction is performed and which demodulates the received signal by using a predetermined algorithm.

The wireless communication receiver further comprises: an averaging unit (corresponding to an averaging section 51) which averages calculated correction values calculated the predetermined number of times by the frequency offset correction value estimation unit; and a feedback correction unit (corresponding to a frequency offset correction section 52) which feeds back the averaging result to correct a frequency offset of subsequent received signals. The frequency offset correction unit corrects a frequency offset component which cannot be corrected by the feedback correction unit.

The wireless communication receiver further comprises an averaging unit which averages correction values calculated the predetermined number of times by the frequency offset correction value estimation unit. An oscillator on a reception side is directly controlled on the basis of the averaging result to correct a frequency offset of subsequent received signals, and the frequency offset correction unit correct a frequency offset component which cannot be corrected by the oscillator.

The wireless communication receiver according to an another aspect of the next comprises: a frequency offset correction value estimation unit (corresponding to a frequency offset correction value estimation section 21) which receives a signal including a predetermined fixed pattern from a transmission side, thereafter, selects a combination of fixed patterns used in an estimation process of a frequency offset depending on the state of a channel, and outputs an estimation result of the frequency offset calculated by using the combination of the fixed patterns as a correction value of a determined frequency offset; an averaging unit (corresponding to an averaging section 51) which averages correction values calculated the predetermined number of times by the frequency offset correction value estimation unit; a feedback correction unit (corresponding to a frequency offset correction section 52) which feeds back the averaging result to correct a frequency offset of subsequent received signals; and an equalizer (corresponding to an equalizer 23) which receives the received signal obtained after the correction is performed and which demodulates the received signal by using a predetermined algorithm.

The wireless communication receiver according to still another aspect of the invention comprises : a frequency offset correction value estimation unit (corresponding to frequency offset correction value estimation sections 21a, ..., 21b) of P (arbitrary number) series which receive signals including predetermined fixed patterns from a transmission side, thereafter, select combinations of fixed patterns used in estimation processes of frequency offsets depending on the state of a channel, and output estimation results of the frequency offsets calculated by using the combinations of the fixed patterns as correction values of determined frequency offsets; a combining unit (corresponding to a combining section 24) which averages the P correction values to output an averaging result as a correction value of a frequency offset being common to the respective series; a frequency offset correction unit (corresponding to frequency offset correction sections 22a, ..., 22b) of P series which correct frequency offsets of received signals on the basis of the common correction value; and an equalizer (corresponding to an equalizer 23a) which receives P received signals obtained after the correction is performed and which demodulates the received signals by using a predetermined algorithm.

The wireless communication receiver further comprises: an averaging unit (corresponding to an averaging section 51) which averages correction values calculated the predetermined number of times by the combining unit; and a feedback correction unit (corresponding to frequency offset correction sections 52a, ..., 52b) of P series which feed back the averaging result to correct frequency offset of subsequent received signals. The frequency offset correction unit of P series correct frequency offset components which cannot be corrected by the feedback correction unit of P series, respectively.

The wireless communication receiver further comprises an averaging unit which averages correction values calculated the predetermined number of times by the combining unit. An oscillator on a reception side is directly controlled on the basis of the averaging result to correct a frequency offset of subsequent received signals, and the frequency offset correction unit of P series correct frequency offset components which cannot be corrected by the oscillator, respectively.

The wireless communication receiver according to still another aspect of the invention comprises : a frequency offset correction value estimation unit (corresponding to frequency offset correction value estimation sections 21a, ..., 21b) of P (arbitrary number) series which receive signals including predetermined fixed patterns from a transmission side, thereafter, select combinations of fixed patterns used in estimation processes of frequency offsets depending on the state of a channel, and output estimation results of the frequency offsets calculated by using the combinations of the fixed patterns as correction values of determined frequency offsets; a combining unit (corresponding to combining section 24) which averages the P correction values to output an averaging result as a correction value of a frequency offset being common to the respective series; an averaging unit (corresponding to an averaging section 51) which averages correction values calculated the predetermined number of times by the combining unit; a feedback correction unit (corresponding to frequency offset correction sections 52a, ..., 52b) of P series which feed back the averaging result to correct frequency offset of subsequent received signals; and an equalizer (corresponding to an equalizer 23a) which receives Preceived signals obtained after the correction is performed and which demodulates the received signals by using a predetermined algorithm.

In the wireless communication receiver, the frequency offset correction value estimation unit comprises: a first frequency offset estimation unit (corresponding to a first frequency offset estimation section 31) which estimates a frequency offset of a received signal by using the same fixed patterns located at different positions; a second frequency offset estimation unit (corresponding to a second frequency offset estimation section 32) which estimates a frequency offset of a received signal by using the same fixed patterns which are different from the fixed patterns used in the first frequency offset estimation unit and located at different positions; an estimation value selection unit (corresponding to an estimation scheme selection section 33) which selects any one of the estimation values of the frequency offsets depending on a state of a channel; and an estimation value switching unit (corresponding to a correction value switching section 34) which selects the outputs of the estimation values on the basis of the selection result.

In the wireless communication receiver, the estimation value selection unit comprises: a delay spread estimation unit (corresponding to a delay spread estimation section 41) which estimates an amount of delay of a channel by using a fixed pattern; anoise power estimation unit (corresponding to a noise power estimation section 42) which estimates a noise power by using a fixed pattern; and an estimation value decision unit (corresponding to an estimation scheme decision section 43) which decides the estimation value of one preferably selected frequency offset on the basis of the estimation value of the delay spread and the estimation value of the noise power.

In the wireless communication receiver, the estimation value selection unit comprises: a delay spread estimation unit which estimates an amount of delay of a channel by using a fixed pattern; and an estimation value decision unit which decides the estimation value of one preferably selected frequency offset on the basis of the estimation value of the delay spread.

In the wireless communication receiver, the delay spread estimation unit estimates powers in units of paths which arrive, calculates a threshold value on the basis of the powers of M (M is a natural number) paths including a path having the maximum power, and sets a range including a path having a power higher than the threshold value as an estimation value of a delay spread.

In the wireless communication receiver, the delay spread estimation unit estimates powers in units of paths which arrive, calculates a threshold value on the basis of the noise power, and sets a range including a path having a power higher than the threshold value as an estimation value of a delay spread.

In the wireless communication receiver, the delay spread estimation unit estimates powers in units of paths which arrive, calculates a threshold value on the basis of powers of M (M is a natural number) paths including a path having the maximum power or the noise power, and sets a range including a path having a power higher than the threshold value as an estimation value of a delay spread.

### BRIEF DESCRIPTION OF THE DRAWINGS

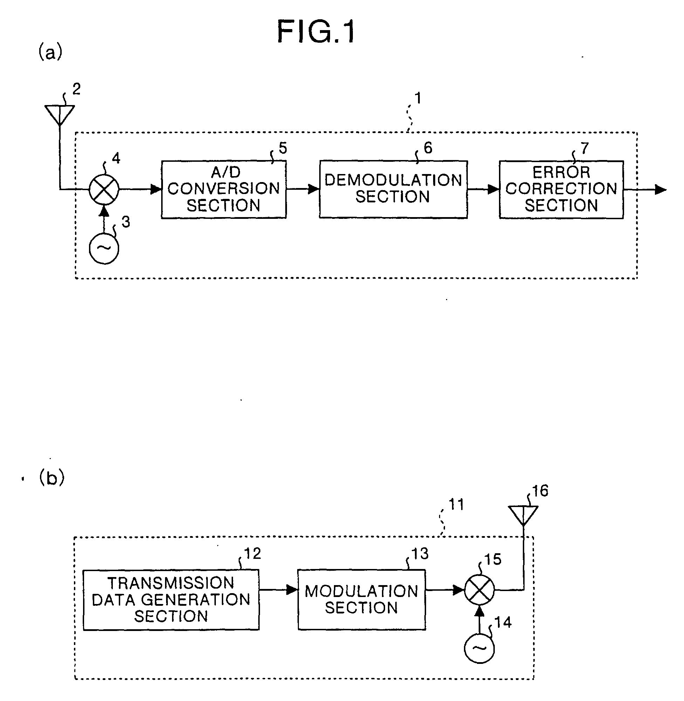

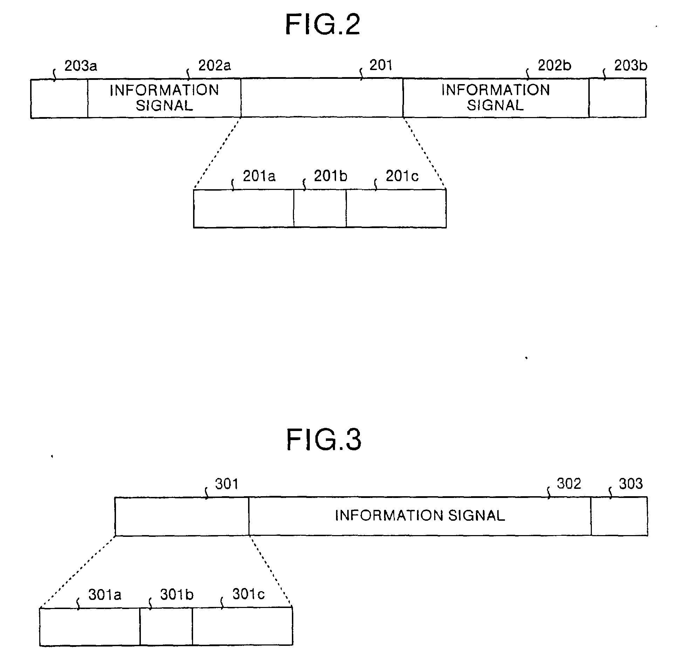

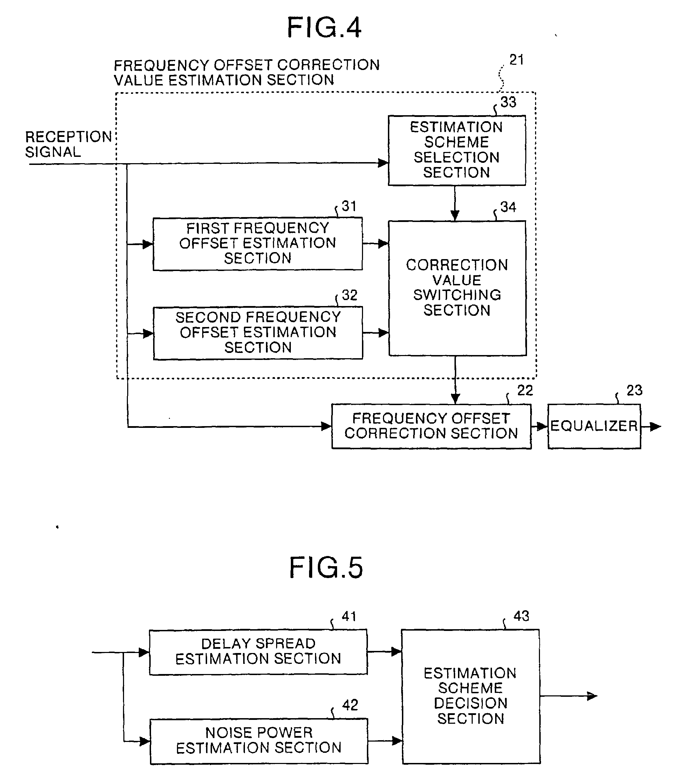

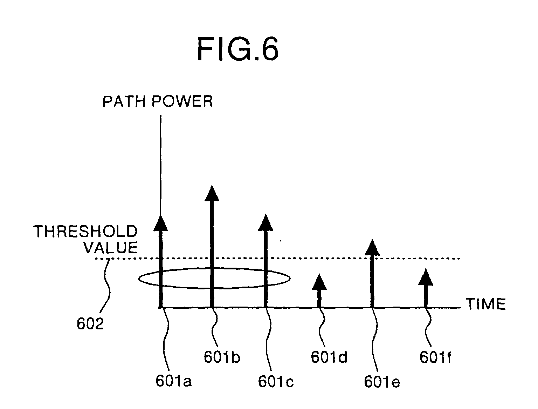

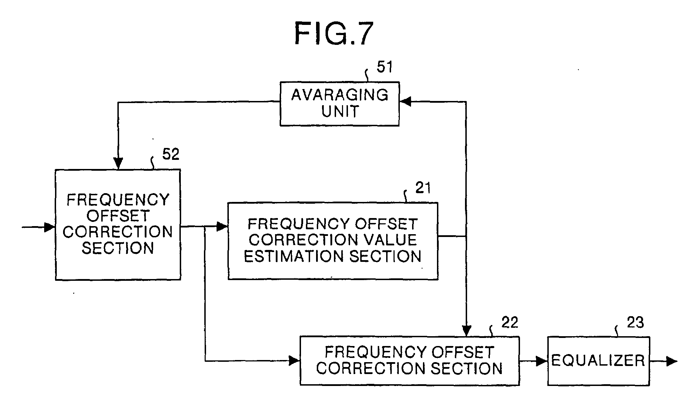

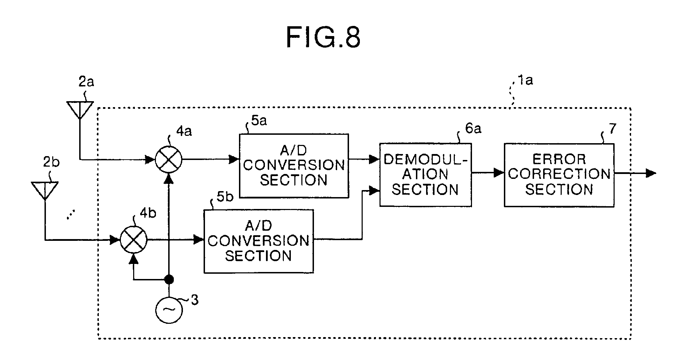

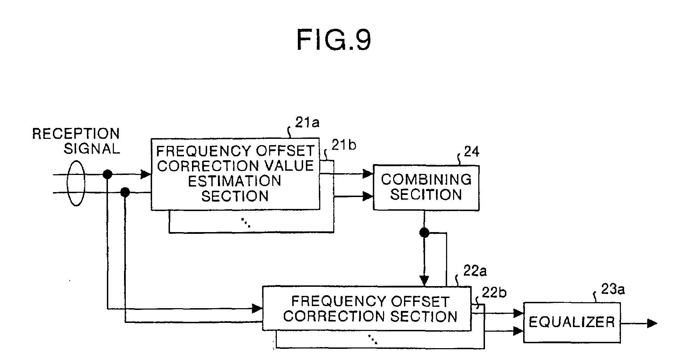

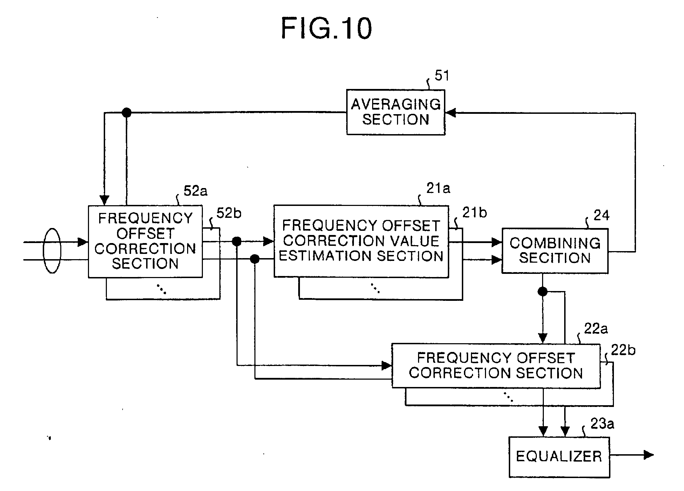

Fig. 1 includes diagrams showing the configuration of a first embodiment of a receiver according to the present invention and the configuration of a conventional transmission device; Fig. 2 is a diagram showing an example of a transmission frame format generated by the transmission device; Fig. 3 is a diagram showing an example of a transmission frame format generated by the transmission device; Fig. 4 is a diagram showing the configuration of a demodulation unit of the first embodiment; Fig. 5 is a diagram showing a configuration of an estimation scheme selection unit; Fig. 6 is a diagram showing a method of estimating a delay spread in a delay spread estimation unit; Fig. 7 is a diagram showing the configuration of a demodulation unit in a second embodiment; Fig. 8 is a diagram showing the configuration of a third embodiment of a receiver according to the present invention; Fig. 9 is a diagram showing the configuration of a demodulation unit of the third embodiment; and Fig. 10 is a diagram showing a demodulation unit according to a fourth embodiment.

### BEST MODE FOR CARRYING OUT THE INVENTION

Embodiments of a wireless communication receiver according to the present invention will be described below in detail with reference to the accompanying drawings. The present invention is not limited to the embodiments.

### First Embodiment:

Fig. 1 is a diagram showing the configuration (see Fig. 1(a) of a first embodiment of a wireless communication receiver (to be referred to as a receiver hereinafter) according to the present invention and the configuration (see Fig. 1(b)) of a conventional wireless communication receiver (to be referred to as a transmission device hereinafter). In Fig. 1(a), reference numeral 1 denotes a receiver, reference numeral 2 denotes an antenna, reference numeral 3 denotes an oscillator, reference numeral 4 denotes a down-convert unit, reference numeral 5 denotes an A/D conversion unit, reference numeral 6 denotes a demodulation unit, and reference numeral 7 denotes an error correction unit. In Fig. 1(b), reference numeral 11 denotes a transmission device, reference numeral 12 denotes a transmission data generation unit, reference numeral 13 denotes a modulation unit, reference numeral 14 denotes an oscillator, reference numeral 15 denotes an up-convert unit, and reference numeral 16 denotes an antenna.

Basic operations of main parts in the receiver 1 and a transmission device 11 will be briefly described below. For example, in the transmission device 11, the transmission data generation section 12 performs channel encoding to information data including data obtained by encoding voice, data of the internet, and the like to generate transmission data. The modulation unit 13 demodulates transmission data output from the transmission data generation section 12, and the up-convert unit 15 up-converts the modulated transmission data on the basis of a frequency generated by the oscillator 14 ant transmits the up-converted transmitted signal through the antenna 16.

On the other hand, in the receiver 1 according to the present invention, the transmitted signal is received through the antenna 2, and the down-convert section 4 down-converts the received signal on the basis of a frequency generated by the oscillator 3. The analog/digital conversion unit 5 (to be referred to as an A/D conversion unit 5 hereinafter) converts the down-converted analog signal into a digital signal (to be referred to as a received signal hereinafter), and the demodulation section 6 demodulates the A/D-converted received signal (the details of the demodulation section 6 which is the characteristic feature of the present invention will be described later). Finally, the error correction section 7 performs an error correction process such as a deinterleaving process and a decoding process to the demodulated signal

Fig. 2 is a diagram showing an example of a transmission frame format generated by the transmission device 11. For example, a training signal 201 is a known signal on the receiver 1 side, and is constituted by a fixed pattern 201a and a fixed pattern 201c and an arbitrary fixed pattern 201b interposed between the fixed pattern 201a and the fixed pattern 201c. On both the sides of the training signal 201, an information signal 202a and an information signal 202b are present. On the outside of the information signal 202a and the information signal 202b, a fixed pattern 203a and a fixed pattern 203b are present. In this embodiment, the fixed pattern 201a and the fixed pattern 201c must be equal to each other, and the fixed pattern 203a and the fixed pattern 203b must be equal to each other. The fixed pattern 201b may not be arranged.

A concrete example of the transmission frame format in Fig. 2 will be described below. For example, a transmission frame format is expressed by: In the above-mentioned frame format, XX...XXX represents the information signals 202a and 202b, "000" outside the information signals represents the fixed patterns 203a and 203b, "0101110" inside the information signals represents the fixed patterns 201a and 201c, and "11010" at the center represents the arbitrary fixed pattern 201b.

On the other hand, Fig. 3 is a diagram showing an example of a transmission frame format which is different from that in Fig. 2 and generated by the transmission device 11. In this case, the transmission frame is constituted by a training signal 301, an information signal 302, and a fixed pattern 303. For example, the training signal 301 is a known signal on the receiver 1 side, and is constituted by fixed patterns 301a and 301c and an arbitrary fixed pattern 301b interposed between the fixed patterns 301a and 301c. The training signal 301 must partially include the same pattern as a fixed pattern 303. When the condition is satisfied, the arbitrary fixed pattern 301b may not be arranged.

A concrete example of the transmission frame format shown in Fig. 3 will be described below. For example, the transmission frame format can be expressed by: In the above-mentioned frame format, XX...XXX represents the information signal 302, "000" on the right side of the information signal 302 represents the fixed pattern 303, "0101100" on the left side of the information signal 302 represents the fixed pattern 301a and the fixed pattern 301c, and "01010" between the fixed pattern 301a and the fixed pattern 301c represents the arbitrary fixed pattern 301b. The training signal 301 includes "000" which is the same as the fixed pattern 303.

Subsequently, an operation of the demodulation section 6 of the receiver 1 when the transmission frame format shown in Fig. 2 is received will be described below in detail. Fig. 4 is a diagram showing the configuration of the demodulation section 6 according to the first embodiment. In Fig. 4, reference numeral 21 denotes a frequency offset correction value estimation unit, reference numeral 22 denotes a frequency offset correction unit, and reference numeral 23 denotes an equalizer. In the frequency offset correction value estimation section 21, reference numeral 31 denotes a first frequency offset estimation section 31, reference numeral 32 denotes a second frequency offset estimation section, reference numeral 33 denotes an estimation scheme selection section, and reference numeral 34 denotes a correction value switching section.

For example, in the first frequency offset estimation section 31, by using the fixed pattern 201a and the fixed pattern 201c included in a received signal (see the transmission frame format in Fig. 2), a frequency offset is estimated as expressed in Equations (1) and (2):$\text{F1 = Σ [r(N13+i) × CONJG {r (N11+i)}]}$$\text{f1 = arctan {Im(F1)/Re(F1)}/(N13-N11)}$

In Equations (1) and (2), reference symbol N11 denotes time corresponding to the start position of the fixed pattern 201a in a received signal r(n), reference symbol N13 denotes time corresponding to the start position of the fixed pattern 201c in the received signal r(n), reference symbol CONJG{r(N11 + i) } denotes a complex conjugation of a complex number r (N11 + i) , reference symbol Re(F1) denotes the real part of a complex number F1, reference symbol Im(F1) denotes an imaginary part of the complex number F1, and reference symbol arctan{Im(F1)/Re(F1)} denotes an arc tangent of a real number Im(F1)/Re(F1). Symbol Σ in Equation (1) represents that the sum total from i = L to i = N1 - 1. At this time, reference symbol N1 denotes the lengths of the fixed patterns 201a and 201c, and reference symbol L represents a length corresponding to the maximum delay time of an effective delay wave generated in a channel.

In this manner, the value F1 calculated by Equation (1) represents a result obtained by composing an estimation value (complex number) of a phase rotation amount generated in symbols (N13 - N11) by a weight corresponding to the power of a received signal. The value f1 calculated by Equation (2) represents an estimation value (angle) of a phase rotation amount generated in one symbol.

On the other hand, in the second frequency offset estimation section 32, by using the fixed pattern 203a and the fixed pattern 203b included in the received signal (see the transmission frame format in Fig. 2), a frequency offset is estimated as expressed in Equations (3) and (4).$\text{F3 = r(N32+N3-1)×CONJG {r (N31+N3-1)}}$$\text{f3 = arctan {Im(F3)/Re(F3)}/(N32-N31)}$

In Equations (3) and (4), reference symbol N31 denotes time corresponding to the start position of the fixed pattern 203a in a received signal r(n), reference symbol N32 denotes time corresponding to the start position of the fixed pattern 203b in the received signal r(n), and reference symbol N3 denotes the lengths of the fixed pattern 203a and 203b.

In this manner, the value F3 calculated by Equation (3) represents an estimation value (complex number) of a phase rotation amount generated in symbols (N32 - N31) . The value f3 calculated by Equation (4) represents an estimation value (angle) of a phase rotation amount generated in one symbol.

In the estimation scheme selection section 33, by using a training signal included in a received signal, any one of an estimation value of a frequency offset output from the first frequency offset estimation section 31 and an estimation value of a frequency offset output from the second frequency offset estimation section 32 is selected.

In the correction value switching section 34, on the basis of a selection result obtained by the estimation scheme selection section 33, an output is switched to any one of the estimation value of the frequency offset output from the first frequency offset estimation section 31 and the estimation value of the frequency offset output from the second frequency offset estimation section 32. One estimation value selected here is output to the subsequent frequency offset correction section 22 as a correction value.

In the frequency offset correction section 22, on the basis of the correction value output from the correction value switching section 34, correction of the received signal is performed by using the following equation:$\text{r'(n) = r(n)×{cos(n×r) - j·sin(n×f)}}$

In Equation (5), reference symbol j denotes the square root of (-1), reference symbol r'(n) denotes the corrected received signal, and reference symbol f denotes a correction value output from the correction value switching section 34.

Finally, in Fig. 23, the received signal in which distortion caused by a frequency offset is corrected is received, and, thereafter, the received signal is demodulated in consideration of distortion caused by a multipath caused by frequency selective fading or the like. The demodulation result is output to the subsequent error correction section 7. The configuration of the equalizer 23 is not limited to the above configuration. Maximum-likelihood sequence estimation (MLSE: Maximum-Likelihood Sequence Estimation) which is a known technique, decision-feedback sequence estimation (DFSE: Decision-Feedback Sequence Estimation or DDFSE: Delayed Decision-Feedback Sequence Estimation), a decision-feedback equalizer (DFE: Decision-Feedback Equalizer), RSSE (Reduced-State Sequence Estimation), a list-output Viterbi equalizer (LVE: List-output Viterbi Equalizer), an equalizer using an M algorithm, an SOVA (Soft-Output Viterbi Algorithm), a soft-decision output equalizer using an algorithm such as MAP (Maximum a Posteriori), Max-log-MAP, or Log-MAP, an equalizer obtained by modifying these equalizers, or the like can be used. By using the configuration including the error correction section 7, a Turbo Equalizer or an equalizer to which an error correction function is combined may be used.

A method of selecting the estimation values of the frequency offsets will be described below. Fig. 5 is a diagram showing a configuration of the estimation scheme selection section 33. In Fig. 5, reference numeral denotes a delay spread estimation section, reference numeral 42 denotes a noise power estimation section, and reference numeral 43 denotes an estimation scheme decision section.

In the delay spread estimation section 41, by using a training signal included in a received signal, delay time of the maximum effective delay wave of a channel is estimated, and the estimation result is output to the estimation scheme decision section 43 as delay spread time . On the other hand, in the noise power estimation section 42, a noise power is estimated by using the training signal included in the received signal, and the estimation result is output to the estimation scheme decision section 43. In the estimation scheme decision section 43, preferably selected one of the estimation value of the frequency offset output from the first frequency offset estimation section 31 and the estimation value of the frequency offset output from the second frequency offset estimation section 32 is decided on the basis of the received noise power estimation value and the delay spread estimation value.

An operation in the estimation scheme selection section 33 will be described below under the conditions in which, for example, the length between the fixed patterns 203a and 203b is given by N3 = 3, the length between the fixed patterns 201a and 201c is given by N1 = 10, and (N32 - N31) is considerably larger than (N13 - N11).

In this case, with respect to an estimation precision, the estimation value of the output from the second frequency offset estimation section 32 can be estimated at a precision higher than that of the estimation value of the output from the first frequency offset estimation section 31 because the second frequency of f set estimation section 32 calculates the phase rotation amount generated in one symbol from the phase rotation amount generated in the symbols (N32 - N31). However, when the delay time of the maximum effective delay wave of the channel is larger than N3, the estimation precision of the estimation value of the output from the second frequency offset estimation section 32 is deteriorated. The estimation value of the output from the other first frequency offset estimation section 31 can be estimated at a precision higher than that of the estimation value of the output from the second frequency offset estimation section 32.

In the estimation scheme decision section 43, when the estimation value of the delay spread is larger than the length N3 between the fixed patterns 203a and 203b, or when the estimation value of the noise power is larger than a specific threshold value, the estimation value of the frequency offset of the output from the first frequency offset estimation section 31 is selected. In the other case, the estimation value of the frequency offset of the output from the second frequency offset estimation section 32 is selected.

A method of estimating the delay spread will be described below. Fig. 6 is a diagram showing a method of estimating a delay spread in the delay spread estimation section 41. In Fig. 6, reference numerals 601a, 601b, 601c, 601d, 601e, and 601f denote path powers, respectively, and reference numeral 602 denotes a threshold value of a power.

In the delay spread estimation section 41, on the basis of a received signal and a training signal, path powers are estimated. The path powers 601a to 601f in Fig. 6 represent estimation results, respectively. The abscissa indicates time. In this case, the path power 601a is a power of a path which directly arrives, and the path power 601f is a power of a path having maximum delay time. In the delay spread estimation section 41, the sum of the path powers 601a to 601c is calculated, and a value obtained by multiplying a fixed constant to the sum of powers is set as the threshold value 602. The range until a path having a power higher than the threshold value 602 is set as an amount of delay of the channel. In this manner, an accurate amount of delay can be known, and an apparent decision reference can be set in the estimation scheme decision section 43. For this reason, the estimation scheme selection section 33 can easily perform switching control of the correction value switching section 34 at a high precision.

As another method of estimating a delay spread, for example, a value obtained by multiplying a fixed constant to a noise power calculated by the noise power estimation section 42 is set as the threshold value 602. In this state, the range until the path having a power higher than the threshold value can also be set as an amount of delay of the channel.

As a method of estimating a delay spread different from the methods described above, for example, the sum of the path powers 601a to 601c is compared with the noise power calculated by the noise power estimation section 42, and a value obtained by multiplying a fixed constant to larger one of the sum of the powers and the noise power is set as the threshold value 602. In this state, a range until a path having a power higher than the threshold value 602 may be set as the amount of delay of the channel.

As described above, in this embodiment, the estimation value of a frequency offset to be used is selected depending on communication conditions such as the state of a channel, and, on the basis of the estimation value of the selected frequency offset, a distortion depending on the frequency offset in the received signal is corrected. Even in a communication environment in which intersymbol interference caused by a multipath exists, preferable communication quality can be realized.

In the first embodiment, calculation corresponding to Equation (2) and Equation (4) are actually performed by the frequency offset estimation units, respectively. The present invention is not limited to the embodiment. For example, the present invention may also be realized by replacing the calculation results with a ROM table.

In the first embodiment, both the frequency offset estimation units are operated as described above. However, the present invention is not limited to this embodiment. For example, only one of the first frequency offset estimation section 31 and the second frequency offset estimation section 32 which is selected by the estimation scheme selection section 33 may be operated.

The estimation scheme decision section 43 may decide an estimation value of a frequency offset to be used on the basis of only the estimation value of the delay spread. In contrast to this, the estimation value of the frequency offset to be used may be decided on the basis of only the estimation value of the noise power.

In the estimation scheme selection section 33, the estimation value of the frequency offset may be selected by not only the state of the channel but also a frequency band to be used. In general, an amount of frequency offset is increased in proportion to a frequency band to be used. For this reason, for example, when a higher frequency band is used, the estimation value of the frequency offset of the output from the first frequency offset estimation section 31 is used. When a lower frequency band is used, the estimation value of the frequency offset of the output from the second frequency offset estimation section 32 is used. This is because, when a phase rotation amount generated by a frequency offset is large, and a phase rotation amount generated in the symbols (N32 - N31) exceeds π, the frequency offset cannot be precisely estimated by the second frequency offset estimation section 32.

In the first embodiment, the frequency offset correction value estimation section 21 performs the processes of Equations (1) to (4). However, the present invention is not limited to the embodiment. For example, the frequency offset correction value estimation section 21 performs the processes of Equations (1) and (3) to output an estimation value of a frequency offset of a complex number. Thereafter, the frequency offset correction section 22 may be performs the processes of Equations (2) and (4).

### Second Embodiment:

Fig. 7 is a diagram showing the configuration of a second embodiment of a receiver according to the present invention. More specifically, Fig. 7 is a diagram showing the configuration of a demodulation section 6 in the second embodiment. In Fig. 7, reference numeral 51 denotes an averaging section, and reference numeral 52 denotes a frequency offset correction section. The other configuration is the same as that in Fig. 4 of the first embodiment described above. For this reason, the same reference numerals as in Fig. 4 denote the same parts in Fig. 7, and a description thereof will be omitted. Subsequently, in this embodiment, only parts which are different from the parts of the first embodiment described above will be described below.

For example, in the averaging section 51, frequency offset correction values output from the frequency offset correction value estimation section 21 is averaged. In the frequency offset correction section 52, a received signal is corrected by using the following Equations (6) and (7) on the basis of the average value output from the averaging section 51:$\text{f(m) = f(m - 1) + Δf(m - 1)}$$\text{r'(n)= r(n)×[cos{n×f(m)}-j·sin{n×f(m)}]}$

In Equations (6) and (7), reference symbol Δf(m) denotes a frequency offset correction value output from the averaging section 51 in the mth frame, and f(m) denotes a frequency offset correction value used for correction of a received signal by the frequency offset correction section 22 in the mth frame.

In this embodiment, the frequency offset correction section 22 corrects a received signal for the frequency offset component which cannot be corrected by the frequency offset correction section 52. By using a configuration in which the frequency offset correction section 22 is omitted, the circuit configuration can be simplified.

As described above, in the second embodiment, the same effect as that of the first embodiment can be obtained, and estimation values of frequency offsets in a plurality of frames are averaged to make it possible to estimate a frequency offset at a high precision. In addition, when a frequency offset is corrected on the basis of the estimation value, more preferable communication quality can be realized.

In the second embodiment, correction of a frequency offset is performed by the frequency offset correction section 52. However, the present invention is not limited to the embodiment. For example, the frequency of the oscillator 3 may be directly controlled without arranging the frequency offset correction section 52.

In the second embodiment, the frequency offset correction value estimation section 21 performs the processes of Equations (1) and (3) to output an estimation value of a frequency offset of a complex number. Thereafter, the frequency offset correction section 22 or the frequency offset correction section 52 may perform the processes of Equations (2) and (4).

### Third Embodiment:

Fig. 8 is a diagram showing the configuration of a third embodiment of a receiver according to the present invention. In Fig. 8, reference numeral 1a denotes a receiver, reference numerals 2a, ..., 2b denote P (arbitrary integer) antennas 2a, ..., 2b, reference numeral 3 denotes a oscillator, reference numerals 4a, ..., 4b denote P down-convert units, reference numerals 5a, ..., 5b denote P A/D conversion units, reference numeral 6a denotes a demodulation unit, and reference numeral 7 denotes an error correction unit.

A basic operation of a main part of the receiver 1a will be briefly described below. In the receiver 1a according to the present invention, P transmitted signals are received through the P antennas 2a, ..., 2b. First, the down-convert units 4a, ..., 4b down-convert the P signals received on the basis of the frequency generated by the oscillator 3. The A/D conversion sections 5a, ..., 5b convert the P down-converted analog signals into digital signals (to be referred to as received signals hereinafter), respectively. The demodulation section 6a performs a demodulation process by using the P A/D-converted received signals (the details of the demodulation section 6a which is a characteristic feature of the present invention will be described later) . Finally, the error correction section 7 performs error correction processes such as a deinterleaving process and a decoding process to the demodulated signals.

An operation of the demodulation section 6a in the receiver 1a will be described below. Fig. 9 is a diagram showing the configuration of the demodulation section 6a of the third embodiment. In Fig. 9, reference numerals 21a, ..., 21b denote P frequency offset correction value estimation sections, reference numerals 22a,.., 22b denote P frequency offset correction sections, reference numeral 23a denotes an equalizer, and reference numeral 24 denotes a combining unit. The configurations and the operations of the frequency offset correction value estimation sections are the same as those of the frequency offset correction value estimation section 21 described above. For this reason, the same reference numerals as in the frequency offset correction value estimation sections denote the same parts in the frequency offset correction value estimation section 21, and a description thereof will be omitted.

The P frequency offset correction value estimation sections 21a, ..., 21b receive corresponding received signals, respectively, and independently perform the same process as that performed by the frequency offset correction value estimation section 21 of the first embodiment described above to output correction values of frequency offsets. The combining section 24 receives the correction values of the P frequency offsets output from the P frequency offset correction value estimation sections 21a to 21b, thereafter, calculates the average of these correction values, and outputs the average value as a correction value of a frequency offset.

The P frequency offset correction sections 22a to 22b receive corresponding received signals and the average value, independently perform the same process as that of the frequency offset correction section 22 of the first embodiment described above, and perform correction processes of the respective frequency offsets. Finally, the equalizer 23a receives the P corrected received signals, demodulates the received signals in consideration of distortion caused by a multipath such as frequency selective fading, and outputs the demodulation result to the error correction section 7. As the equalizer, the same equalizer as that used in the first embodiment described above is used.

As described above, the same effect as that in the first embodiment can be achieved according to the third embodiment. For example, when a configuration which can achieve diversity reception is used, communication having higher quality can be realized.

As in the first embodiment described above, when a configuration in which the P frequency offset correction value estimation sections 21a to 21b perform only the processes of Equations (1) and (3) is used, the combining section 24 calculates the sum of estimation values of frequency offsets of P complex numbers, and outputs the sum as an estimation value of a frequency offset of a common complex number. The P frequency offset correction sections 22a to 22b receive the corresponding received signals and the sum, and independently performthe processes of Equations (2) and (4) as in the first embodiment described above.

### Fourth Embodiment:

Fig. 10 is a diagram showing the configuration of a fourth embodiment of a receiver according to the present invention. More specifically, Fig. 10 is a diagram showing the configuration of a demodulation section 6a according to the fourth embodiment. In Fig. 10, reference numeral 51 denotes an averaging section, and reference numerals 52a, ..., 52b denote frequency offset correction sections. The other configuration is the same as that in Fig. 9 of the third embodiment described above. For this reason, the same reference numerals as in Fig. 9 denote the same parts in Fig. 10, and a description thereof will be omitted. Subsequently, in this embodiment, only parts which are different from the parts of the third embodiment described above will be described below.

For example, in the averaging section 51, frequency offset correction values output from the combining section 24 is averaged. In each of the frequency offset correction sections 52a, ..., 52b, a received signal is corrected by using Equations (6) and (7) described above on the basis of the common correction value output from the averaging section 51.

In the fourth embodiment, the P frequency offset correction sections 22a, ..., 22b correct received signals for the frequency offset components which cannot be corrected by the frequency offset correction sections 52a, ..., 52b. By using a configuration in which the P frequency offset correction sections 22a, ..., 22b are omitted, the circuit configuration can be simplified.

As described above, in the fourth embodiment, the same diversity effect as that of the third embodiment can be obtained, and estimation values of frequency offsets in a plurality of frames are averaged to make it possible to estimate a frequency offset at a high precision. In addition, when a frequency offset is corrected on the basis of the estimation value, communication having higher quality can be realized.

As described above, according to the present invention, an estimation value of a frequency offset to be used is selected depending on communication conditions such as a state of a channel, and distortion depending on a frequency offset in a received signal is corrected on the basis of the selected estimation value of the frequency offset, preferable communication quality can be advantageously achieved even in a communication environment in which intersymbol interference caused by a multipath exists.

According to the next invention, estimation values of frequency offsets in a plurality of frames are averaged, so that a frequency offset can be estimated at a high precision. In addition, the frequency offset is corrected on the basis of the estimation value, so that more preferable communication quality can be advantageously realized.

According to the next invention, estimation values of frequency offsets in a plurality of frames are averaged, so that a frequency offset can be estimated at a high precision. In addition, an oscillator is directly controlled on the basis of the estimation value, so that more preferable communication quality can be advantageously realized.

According to the next invention, a configuration in which a frequency offset correction unit is omitted is employed, so that the circuit configuration can be advantageously simplified while communication quality which is preferable more than that of a conventional receiver is realized.

According to the next invention, in addition to a configuration which selects an estimation value of a frequency offset to be used depending on communication conditions such as the state of a channel and which correct distortion depending on a frequency offset on the basis of the selected estimation value of the frequency offset, a configuration which can perform diversity reception is arranged, so that communication having higher quality can be advantageously realized.

According to the next invention, in addition to a configuration which averages estimation values of frequency offsets in a plurality of frames to estimate a frequency offset at a higher precision and corrects the frequency offset on the basis of the estimation value, a configuration which can perform diversity reception is arranged, so that communication having higher quality can be advantageously realized.

According to the next invention, in addition to a configuration which averages estimation values of frequency offsets in a plurality of frames to estimate a frequency offset at a higher precision and directly control an oscillator on the basis of the estimation value, a configuration which can perform diversity reception is arranged, so that communication having higher quality can be advantageously realized.

According to the next invention, a configuration in which a frequency offset correction unit is omitted is used, and a configuration which can perform diversity reception is arranged, so that the circuit configuration can be advantageously simplified while communication quality higher than that of a conventional receiver is realized.

According to the next invention, the frequency offset correction unit of subsequent can exactly correct received signal on the basis of collect value of estimation value switching control output, therefore, demodulation accuracy can drastically improve by equalizer.

According to the next invention, for example, on the basis of a comparison result of an estimation value of a delay spread and a length between two fixed patterns or a comparison result of an estimation value of a noise power and a specific threshold value (power), any one of an estimation value of a frequency offset of an output from a first frequency offset estimation unit and an estimation value of a frequency offset of an output from a second frequency offset estimation unit is selected. In this manner, since the estimation precision of the frequency offset can be considerably improved, the frequency offset can be advantageously corrected at a high precision.

According to the next invention, for example, on the basis of a comparison result of an estimation value of a delay spread and a length between two fixed patterns, any one of an estimation value of a frequency offset of an output from a first frequency offset estimation unit and an estimation value of a frequency offset of an output from a second frequency offset estimation unit is selected. In this manner, since the estimation precision of the frequency offset can be considerably improved, the frequency offset can be advantageously corrected at a high precision.

According to the next invention, an apparent decision reference (threshold value) can be set from a power of an arrival path, and a more precise amount of delay can be known. For this reason, an estimation value selection unit can easily perform switching control of the estimation value switching unit at a high precision advantageously.

According to the next invention, an apparent decision reference (threshold value) can be set from a noise power, and a more precise amount of delay can be known. For this reason, an estimation value selection unit can easily perform switching control of the estimation value switching unit at a high precision advantageously.

According to the next invention, an apparent decision reference (threshold value) can be set from a power of an arrival path or a noise power, and a more precise amount of delay can be known. For this reason, an estimation value selection unit can easily perform switching control of the estimation value switching unit at a high precision advantageously.

### INDUSTRIAL APPLICABILITY

As described above, a wireless communication receiver according to the present invention is useful for a device having a frequency offset correction function, and is suitable for a receiver for wireless communication of an automobile telephone, a portable telephone, a cordless telephone, or the like.

## Claims

1. A wireless communication receiver comprising:
a frequency offset correction value estimation unit which receives a signal including a predetermined fixed pattern from a transmission side, thereafter, selects a combination of fixed patterns used in an estimation process of a frequency offset depending on the state of a channel, and outputs an estimation result of the frequency offset calculated by using the combination of the fixed patterns as a correction value of a determined frequency offset;
a frequency offset correction unit which corrects a frequency offset of a received signal on the basis of the correction value; and
an equalizing unit which receives the received signal obtained after the correction is performed and which demodulates the received signal by using a predetermined algorithm.

2. The wireless communication receiver according to claim 1, further comprising:
an averaging unit which averages calculated correction values calculated the predetermined number of times by the frequency offset correction value estimation unit; and
a feedback correction unit which feeds back the averaging result to correct a frequency offset of subsequent received signals,
wherein the frequency offset correction unit corrects a frequency offset component which cannot be corrected by the feedback correction unit.

3. The wireless communication receiver according to claim 1, further comprising:
an averaging unit which averages correction values calculated the predetermined number of times by the frequency offset correction value estimation unit,
wherein an oscillator on a reception side is directly controlled on the basis of the averaging result to correct a frequency offset of subsequent received signals, and
the frequency offset correction unit correct a frequency offset component which cannot be corrected by the oscillator.

4. A wireless communication receiver comprising:
a frequency offset correction value estimation unit which receives a signal including a predetermined fixed pattern from a transmission side, thereafter, selects a combination of fixed patterns used in an estimation process of a frequency offset depending on the state of a channel, and outputs an estimation result of the frequency offset calculated by using the combination of the fixed patterns as a correction value of a determined frequency offset;
an averaging unit which averages correction values calculated the predetermined number of times by the frequency offset correction value estimation unit;
a feedback correction unit which feeds back the averaging result to correct a frequency offset of subsequent received signals; and
an equalizing unit which receives the received signal obtained after the correction is performed and which demodulates the received signal by using a predetermined algorithm.

5. A wireless communication receiver comprising:
a frequency offset correction value estimation unit of P (arbitrary number) series which receive signals including predetermined fixed patterns from a transmission side, thereafter, select combinations of fixed patterns used in estimation processes of frequency offsets depending on the state of a channel, and output estimation results of the frequency offsets calculated by using the combinations of the fixed patterns as correction values of determined frequency offsets;
a combining unit which averages the P correction values to output an averaging result as a correction value of a frequency offset being common to the respective series;
a frequency offset correction unit of P series which correct frequency offsets of received signals on the basis of the common correction value; and
an equalizing unit which receives P received signals obtained after the correction is performed and which demodulates the received signals by using a predetermined algorithm.

6. The wireless communication receiver according to claim 5, further comprising:
an averaging unit which averages correction values calculated the predetermined number of times by the combining unit; and
a feedback correction unit of P series which feed back the averaging result to correct frequency offset of subsequent received signals,
wherein the frequency offset correction unit of P series correct frequency offset components which cannot be corrected by the feedback correction unit of P series, respectively.

7. The wireless communication receiver according to claim 5, further comprising:
an averaging unit which averages correction values calculated the predetermined number of times by the combining unit,
wherein an oscillator on a reception side is directly controlled on the basis of the averaging result to correct a frequency offset of subsequent received signals, and
the frequency offset correction unit of P series correct frequency offset components which cannot be corrected by the oscillator, respectively.

8. A wireless communication receiver comprising:
a frequency offset correction value estimation unit of P (arbitrary number) series which receive signals including predetermined fixed patterns from a transmission side, thereafter, select combinations of fixed patterns used in estimation processes of frequency offsets depending on the state of a channel, and output estimation results of the frequency offsets calculated by using the combinations of the fixed patterns as correction values of determined frequency offsets;
a combining unit which averages the P correction values to output an averaging result as a correction value of a frequency offset being common to the respective series;
an averaging unit which averages correction values calculated the predetermined number of times by the combining unit;
a feedback correction unit of P series which feed back the averaging result to correct frequency offset of subsequent received signals; and
an equalizing unit which receives P received signals obtained after the correction is performed and which demodulates the received signals by using a predetermined algorithm.

9. The wireless communication receiver according to claim 1, wherein the frequency offset correction value estimation unit includes,
a first frequency offset estimation unit which estimates a frequency offset of a received signal by using the same fixed patterns located at different positions;
a second frequency offset estimation unit which estimates a frequency offset of a received signal by using the same fixed patterns which are different from the fixed patterns used in the first frequency offset estimation unit and located at different positions;
an estimation value selection unit which selects any one of the estimation values of the frequency offsets depending on a state of a channel; and
an estimation value switching unit which selects the outputs of the estimation values on the basis of the selection result.

10. The wireless communication receiver according to claim 9, wherein the estimation value selection unit includes,
a delay spread estimation unit which estimates an amount of delay of a channel by using a fixed pattern;
a noise power estimation unit which estimates a noise power by using a fixed pattern; and
a estimation value decision unit which decides the estimation value of one preferably selected frequency offset on the basis of the estimation value of the delay spread and the estimation value of the noise power.

11. The wireless communication receiver according to claim 9, wherein the estimation value selection unit includes,
a delay spread estimation unit which estimates an amount of delay of a channel by using a fixed pattern; and
an estimation value decision unit which decides the estimation value of one preferably selected frequency offset on the basis of the estimation value of the delay spread.

12. The wireless communication receiver according to claim 10, wherein the delay spread estimation unit estimates powers in units of paths which arrive, calculates a threshold value on the basis of the powers of M (M is a natural number) paths including a path having the maximum power, and sets a range including a path having a power higher than the threshold value as an estimation value of a delay spread.

13. The wireless communication receiver according to claim 10, wherein the delay spread estimation unit estimates powers in units of paths which arrive, calculates a threshold value on the basis of the noise power, and sets a range including a path having a power higher than the threshold value as an estimation value of a delay spread.

14. The wireless communication receiver according to claim 10, wherein the delay spread estimation unit estimates powers in units of paths which arrive, calculates a threshold value on the basis of powers of M (M is a natural number) paths including a path having the maximum power or the noise power, and sets a range including a path having a power higher than the threshold value as an estimation value of a delay spread.
